(19) **Europäisches Patentamt**
**European Patent Office**
**Office européen des brevets**

(11) **EP 4 068 167 A1**

(12) **EUROPEAN PATENT APPLICATION**

(43) Date of publication:
**05.10.2022 Bulletin 2022/40**

(51) International Patent Classification (IPC):
**G06N 5/00** (2006.01)   **G06N 3/04** (2006.01)

(21) Application number: **21214010.7**

(52) Cooperative Patent Classification (CPC):
**G06N 5/003; G06N 3/0445**

(22) Date of filing: **13.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 JP 2021063595**

(71) Applicant: **FUJITSU LIMITED**
**Kawasaki-shi, Kanagawa 211-8588 (JP)**

(72) Inventors:
• **Katayama, Kentaro**
**Kawasaki-shi, Kanagawa, 211-8588 (JP)**
• **Watanabe, Yasuhiro**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION PROGRAM, OPTIMIZATION METHOD, AND OPTIMIZATION APPARATUS**

(57) An optimization program in which a computer executes processing of reading information including first cost for first element, first local fields for the first element, second cost for second element, and a second local field for element belonging to a second group from a first memory, writing the read information to a second memory that has a smaller capacity than that of the first memory, iterating processing of calculating a second change amount of the evaluation function when an exchange of the assignment locations is made between two elements belonging to the first or second group, based on the first local field, the second local field, and the first cost, executing the exchange when the second change amount is smaller than a noise value obtained, updating the first local field and the second local field, and switching a group pair of the first and second groups.

FIG. 1

**Description**

[Technical Field]

The embodiments discussed herein are related to an optimization program, an optimization method, and an optimization apparatus.

[Background Art]

The quadratic assignment problem (QAP) is one of the combinatorial optimization problems. The quadratic assignment problem is a problem for seeking for an assignment for assigning n elements (such as facilities) to n assignment locations with the aim of minimizing the total sum of products of costs between the elements (each being a flow amount such as an amount of supplies transported between two facilities) multiplied by the corresponding distances between the assignment locations where to assign the respective elements. For example, the quadratic assignment problem is a problem for searching for an assignment that satisfies the following Equation (1).
(Equation 1)

$$\min_{\phi \in S_n} \sum_i \sum_j f_{i,j} d_{\phi(i),\phi(j)} \tag{1}$$

In Equation (1), $f_{i,j}$ denotes a cost between elements with identification numbers = i and j, $d_{\phi(i),\phi(j)}$ denotes a distance between assignment locations to which the elements with the identification numbers = i and j are assigned, and $S_n$ denotes a set of n assignment locations.

As an apparatus for calculating a large scale discrete optimization problem which is not well calculated by a von Neumann architecture computer, there is an Ising apparatus (also referred to as a Boltzmann machine) using an Ising type evaluation function (also referred to as an energy function or the like). (PTLs 1 and 2).

The Ising apparatus converts a combinatorial optimization problem into an Ising model expressing behaviors of spins of magnetic elements. Based on the Markov chain Monte Carlo method such as a simulated annealing method or a replica exchange method (also referred to as a parallel tempering method or the like), the Ising apparatus searches for the state of the Ising model that minimizes the value of the Ising type evaluation function (equivalent to the energy). The state of the Ising model may be expressed by a combination of the values of multiple state variables. Each of the state variables may use a value of 0 or 1.

The Ising type evaluation function is defined by, for example, the following Equation (2).
(Equation 2)

$$E = -\sum_{\langle i,j \rangle} W_{ij} x_i x_j - \sum_{i=1} b_i x_i + c \tag{2}$$

The first term on the right side is the total sum of products each obtained from values (each being 0 or 1) of two state variables and a weight value (indicating an intensity of interaction between the two state variables) in one of all the combinations, without omission and duplication, of all the state variables of the Ising model. Here, $x_i$ is a state variable with an identification number i, $x_j$ is a state variable with an identification number j, and $W_{ij}$ is a weight value indicating the intensity of interaction between the state variables with the identification numbers i and j. The second term on the right side is the total sum of products each obtained from a bias coefficient and a state variable for one of the identification numbers. Here, $b_i$ denotes a bias coefficient for the identification number = i. Then, c is a constant.

An energy change amount ($\Delta E_i$) due to a change in the value of $x_i$ is expressed by the following Equation (3).
(Equation 3)

$$\Delta E_i = -\Delta x_i \left( \sum_j W_{ij} x_j + b_i \right) = -\Delta x_i h_i \tag{3}$$

In Equation (3), $\Delta x_i$ is -1 when the state variable $x_i$ changes from 1 to 0, whereas $\Delta x_i$ is 1 when the state variable

$x_i$ changes from 0 to 1. Then, $h_i$ is referred to as a local field and $\Delta E_i$ is the product of $h_i$ and a sign (+1 or -1) depending on $\Delta x_i$.

For example, when $\Delta E_i$ is smaller than a noise value (also referred to as thermal noise) obtained based on a random number and the value of a temperature parameter, a process of updating the value of $x_i$ to generate a state transition and updating the local field is iterated.

Also, the above-described quadratic assignment problem may be calculated by using an Ising type evaluation function.

An Ising type evaluation function of the quadratic assignment problem is expressed by the following Equation (4).
(Equation 4)

$$(Equation\ 4)$$

$$E = \frac{1}{2}x^T W x \qquad (4)$$

In Equation (4), x is a vector of state variables and represents assignment states of n elements to n assignment locations. Here, $\mathbf{x}^T$ is expressed as $(x_{1,1}, ..., x_{1,n}, x_{2,1}, ..., x_{2,n}, ..., x_{n,1}, ..., \mathbf{x}_{n,n})$. Here, $x_{i,j} = 1$ indicates that an element with an identification number = i is assigned to an assignment location with an identification number = j, and $x_{i,j} = 0$ indicates that the element with the identification number = i is not assigned to the assignment location with the identification number = j.

Then, W is a matrix of weight values, and is expressed by the following Equation (5) by using a cost ($f_{i,j}$) and a matrix D of distances between the n assignment locations as described above.
(Equation 5)

$$W = \begin{pmatrix} f_{1,1}D & f_{1,2}D & \dots & f_{1,n}D \\ f_{2,1}D & f_{2,2}D & \dots & f_{2,n}D \\ \vdots & \vdots & \ddots & \vdots \\ f_{n,1}D & f_{n,2}D & \dots & f_{n,n}D \end{pmatrix} \qquad (5)$$

[Citation List]

[Patent Literature]

[PTL 1] Japanese Laid-open Patent Publication No. 2019-159997.

Japanese Laid-open Patent Publication No. 2020-135727 are disclosed as related art.

[Summary]

[Problem]

According to the method of calculating a quadratic assignment problem using an Ising type evaluation function, the processes of calculating an energy change amount, updating the local fields, and so on are iterated many times. For this reason, it is desirable that a storage unit that stores information such as the weight values and the local fields to be used for these processes be accessible at high speed. However, in many cases, such a storage unit has a relatively small capacity. For this reason, when the scale of a problem is large, there is a possibility that the problem may not be calculated because such storage unit is incapable of storing all the information to be used for the calculation.

According to one aspect, an object of the present disclosure is to provide an optimization program, an optimization method, and an optimization apparatus capable of calculating a large scale problem even when a storage unit having a relatively small capacity is used.

[Solution to Problem]

According to an aspect of the embodiments, an optimization program in which a computer executes performs processing of: reading information from a first memory that stores costs between n elements, where n is an integer of 2 or more, and n2 local fields expressing a first change amount of an evaluation function of an Ising type expressing assignment states of the n elements to n assignment locations, the first change amount obtained from a change in a value of each of n2 state variable in the evaluation function, the information including first cost for element belonging to a first group among the n elements divided into a plurality of groups, a first local field for the element belonging to the first group, second cost for element belonging to a second group among the n elements divided into the plurality of groups, and a second local field for element belonging to a second group, writing the read information to a second memory that stores distance between the n assignment locations and the assignment states and that has a smaller capacity than that of the first memory; iterating processing of calculating, executing, and updating, the calculating includes calculating a second change amount of the evaluation function when an exchange of the assignment locations is made between two elements belonging to the first group or the second group, based on the first local field, the second local field, the first cost, and the distance, the executing includes executing, when the second change amount is smaller than a noise value obtained based on a random number and a value of a temperature parameter, the exchange, the updating includes updating the first local field and the second local field based on the first cost, the second cost, and the distance; and switching a group pair of the first and second groups by changing at least one of the first and second groups to another group in the plurality of groups.

[Effects of Invention]

According to one aspect of the present disclosure, a large scale problem may be calculated even when a storage unit having a relatively small capacity is used.

[Brief Description of Drawings]

FIG. 1 is a diagram illustrating an example of an optimization apparatus and an optimization method according to a first embodiment;
FIG. 2 is a diagram illustrating an example of a method of updating local fields;
FIG. 3 is a diagram illustrating an example of a problem for arranging three facilities at three locations;
FIG. 4 is a block diagram illustrating a hardware example of an optimization apparatus according to a second embodiment;
FIG. 5 is a diagram illustrating an example of data stored in a static random-access memory (SRAM) and a dynamic random-access memory (DRAM);
FIG. 6 is a flowchart illustrating a sequence of an example of an optimization method according to the second embodiment;
FIG. 7 is a diagram illustrating an example of writing local field information and flow information for grpX to the SRAM;
FIG. 8 is a flowchart illustrating a sequence of an example of a search process for grpA and grpB (part 1);
FIG. 9 is a flowchart illustrating the sequence of the example of the search process for grpA and grpB (part 2);
FIG. 10 is a flowchart illustrating the sequence of the example of the search process for grpA and grpB (part 3);
FIG. 11 is a diagram illustrating an example of update of local fields and writing of flip information in a case where a flip occurs;
FIG. 12 is a diagram illustrating an example of processing after update of grpX;
FIG. 13 is a diagram illustrating an example of an optimization apparatus according to a third embodiment; and
FIG. 14 is a flowchart illustrating a sequence of an optimization method according to a modification example.

[Description of Embodiments]

Hereinafter, embodiments of the present disclosure will be described with reference to the drawings.
The quadratic assignment problem has a constraint that all elements are to be assigned to different assignment locations. This constraint may be considered as a constraint in which, when $n^2$ state variables included in an evaluation function of an Ising type expressing the assignment states of n elements to n assignment locations are arranged in a matrix with n rows and n columns, a sum of the values of the state variables included in each of the rows and the columns is 1.
In the method of updating the state variables one by one based on $\Delta E_i$ in Equation (3), the calculation of the quadratic assignment problem having this constraint also involves a transition to states that do not satisfy the above constraint, and requests a long calculation time.
A conceivable way to shorten the calculation time is to exclude a transition to assignment states other than assignment states satisfying the above constraint. In this case, the values of four state variables are changed in one state transition. When $n^2$ state variables are arranged in n rows and n columns, the values of four state variables are changed in one state transition so as to satisfy the constraint that the sum of the values of the state variables included in each of the rows and the columns is 1. This makes it possible to exclude a transition to assignment states other than the assignment states satisfying the above constraint.

When a state variable $x_j$ having a value of 0 is an update target candidate, state variables $x_i$ and $x_l$ each having a value of 1 are update target candidates among the state variables included in the same row and the same column as those of $x_j$. In addition, $x_k$ having a value of 0 in the same column as that of $x_i$ and the same row as that of $x_l$ is an update target candidate.

When $\Delta E_j$ denotes an energy change amount of the Ising model due to changes in the values of these four state variables, $\Delta E_j$ is expressed by the following Equation (6).
(Equation 6)

$$\Delta E_j = (h_i + h_l) - (h_j + h_k) - (W_{il} + W_{jk}) \tag{6}$$

A local field change amount ($\Delta h_m$ (m = 1, 2, ..., $n^2$)) due to the changes in $x_i$, $x_j$, $x_k$, and $x_l$ is expressed by the following Equation (7).
(Equation 7)

$$\Delta h_m = W_{jm} + W_{km} - (W_{im} + W_{lm}) \tag{7}$$

As presented in Equations (6) and (7), the weight values are used to calculate the energy change amount and update the local fields. Since the weight values are expressed by Equation (5), the storage unit may store the costs between the n elements and the distances between the n assignment locations instead of storing the $n^2 \times n^2$ weight values themselves. In this case, Equation (6) may be transformed into the following Equation (8).
(Equation 8)

$$\Delta E = h_{i,\phi(j)} + h_{j,\phi(i)} - h_{i,\phi(i)} - h_{j,\phi(j)} + 2 \cdot f_{i,j} \cdot d_{\phi(i),\phi(j)} \tag{8}$$

In Equation (8), $h_{i,\varphi(j)}$ denotes an energy change amount due to a change in $x_{i,\varphi(j)}$ and is equivalent to $h_i$ in Equation (6), $h_{j,\varphi(i)}$ denotes an energy change amount due to a change in $x_{j,\varphi(i)}$ and is equivalent to $h_l$ in Equation (6), $h_{j,\varphi(i)}$ denotes an energy change amount due to a change in $x_{i,\varphi(i)}$ and is equivalent to $h_j$ in Equation (6), and $h_{j,\varphi(j)}$ denotes an energy change amount due to a change in $x_{j,\varphi(j)}$ and is equivalent to $h_k$ in Equation (6). In Equation (8), i and j are identification numbers of elements, $\varphi(i)$ is an identification number of an assignment location to which the element with the identification number = i is assigned, and $\varphi(j)$ is an identification number of an assignment location to which the element with the identification number = j is assigned.

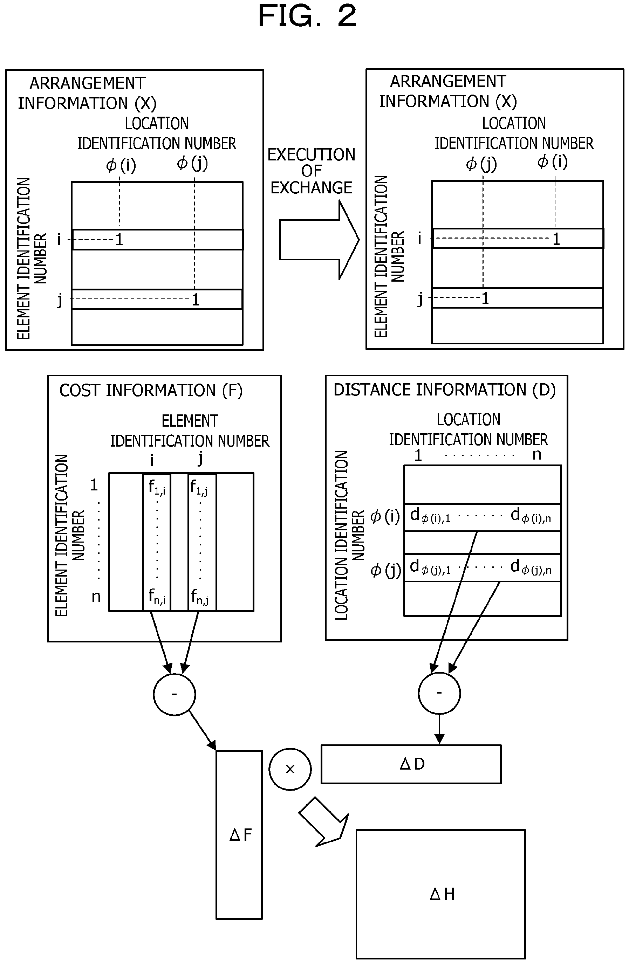

A change amount ($\Delta H$) in the local fields (matrix H) in n rows and n columns is expressed by the following Equation (9) (see FIG. 2 for the reason).
(Equation 9)

$$\Delta H = \Delta F \Delta D = (f_{,j} - f_{,i})(d_{\phi(i),} - d_{\phi(j),}) \tag{9}$$

In Equation (9), $f_{,j}$ denotes all the costs in a j-th column in costs (matrix F) in n rows and n columns, and $f_{,i}$ denotes all the costs in an i-th column in the matrix F. Then, $d_{\varphi(i),}$ denotes all the distances in a $\varphi(i)$-th row in distances (matrix D) in n rows and n columns, and $d_{\varphi(i),}$ denotes all the distances in the $\varphi(j)$-th row in the matrix D.

When the calculation of the energy change amount and the update of the local fields are performed by using Equations (8) and (9), the storage unit does not have to store the $n^2 \times n^2$ weight values themselves. However, when the scale of a problem is increased, the data volumes of the matrix H, the matrix F, and the matrix D are also increased. For this reason, a storage unit being accessible at high speed but having a relatively small capacity, such as a storage unit including a static random-access memory (SRAM), a flip-flop, or the like, may not store all of the matrix H, the matrix F, and the matrix D.

An optimization apparatus and an optimization method according to a first embodiment to be described below are capable of calculating a large scale problem even when a storage unit having a relatively small capacity is used.

(First Embodiment)

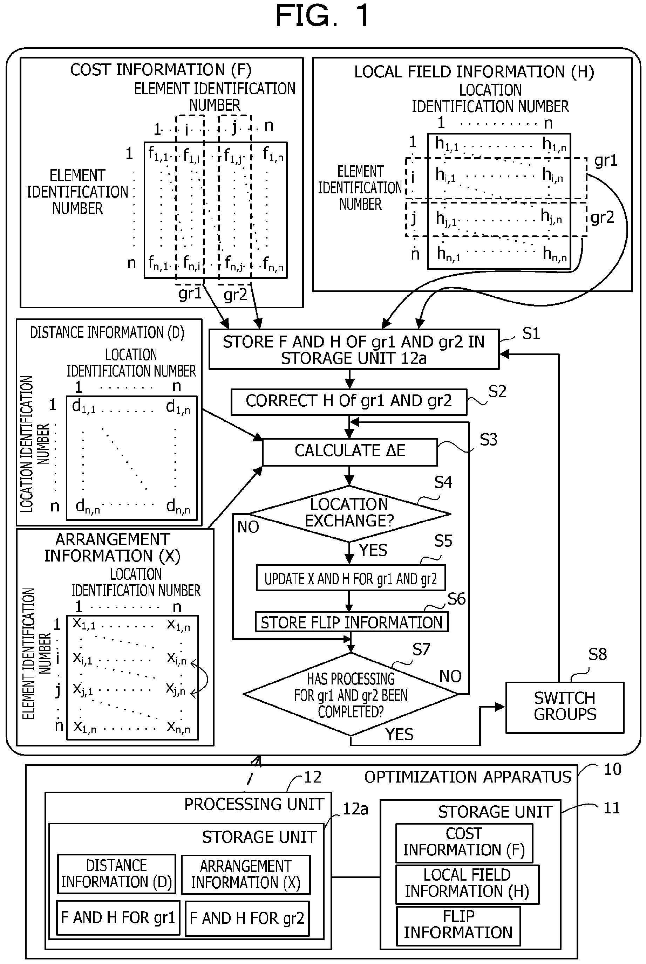

FIG. 1 is a diagram illustrating an example of an optimization apparatus and an optimization method according to the first embodiment.

An optimization apparatus 10 is, for example, a computer, and includes a storage unit 11 and a processing unit 12. The processing unit 12 includes a storage unit 12a.

The storage unit 11 is, for example, a volatile storage device including an electronic circuit such as a dynamic random-access memory (DRAM) or a non-volatile storage device including an electronic circuit such as a hard disk drive (HDD) or a flash memory.

For example, the storage unit 11 stores a program for performing processing to be described later and also stores cost information, local field information, and flip information.

The cost information contains costs between n elements (n is an integer of 2 or more), and is expressed by a matrix F with n rows and n columns. For example, the cost information is input from outside of the optimization apparatus 10 and stored in the storage unit 11.

The local field information contains local fields each indicating a change amount of an evaluation function due to a change in the corresponding one of $n^2$ state variables ($x_{1,1}$ to $x_{n,n}$), and is expressed by a matrix H with n rows and n columns. The initial values of the $n \times n$ local fields ($h_{1,1}$ to $h_{n,n}$) included in the matrix H are calculated, for example, in accordance with Equation (3) based on the initial values of $x_{1,1}$ to $x_{n,n}$ and weight values calculated from the costs and the distances. In the quadratic assignment problem, $b_i$ in Equation (3) is 0. The initial values of $h_{1,1}$ to $h_{n,n}$ may be input from outside of the optimization apparatus 10, or may be calculated by the processing unit 12.

The flip information is expressed by identification information for identifying state variables whose values change due to an exchange between assignment locations where two elements are assigned. The flip information may be stored in the storage unit 12a. Hereinafter, the assignment location is referred to as a location.

For example, the processing unit 12 may be implemented by a processor that is a piece of hardware such as a central processing unit (CPU), a graphics processing unit (GPU) or a digital signal processor (DSP). Instead, the processing unit 12 may be implemented by an electronic circuit such as an application-specific integrated circuit (ASIC) or a field-programmable gate array (FPGA). The processing unit 12 executes the program (optimization program) stored in the storage unit 11, and causes the optimization apparatus 10 to perform processing to be described below. The processing unit 12 may be a set of multiple processors.

The storage unit 12a has a storage capacity smaller than that of the storage unit 11. As the storage unit 12a, an SRAM, a flip-flop, or the like may be used, for example. These devices have smaller storage capacities than those of a DRAM, an HDD, and the like, but allow high-speed reading and writing.

The storage unit 12a stores distance information and arrangement information.

The distance information contains distances between n arrangement locations of the n elements, and is expressed by a matrix D with n rows and n columns. For example, the distance information is input from outside of the optimization apparatus 10 and stored in the storage unit 12a.

The arrangement information indicates locations at which the n elements are arranged (equivalent to the assignment states described above), and is expressed by a matrix X with n rows and n columns including the $n^2$ state variables. The initial values in the arrangement information are input from outside of the optimization apparatus 10 and stored in the storage unit 12a, for example. The initial values in the arrangement information are set so as to satisfy the constraint that the sum of the values of the state variables included in each of the rows and the columns is 1.

The arrangement information may be expressed by a row vector (one dimensional array) including a sequence of identification numbers (column numbers) of locations at which the n elements are arranged.

The storage unit 12a stores the cost information and the local field information about elements belonging to two groups, to be described later, read from the storage unit 11.

The storage unit 12a may be provided outside the processing unit 12 and coupled to the processing unit 12.

FIG. 1 illustrates an example of a sequence of a part of processing of a program (optimization program) executed by the processing unit 12.

Step S1: The processing unit 12 reads, from the storage unit 11, costs and local fields for elements belonging to a first group (gr1) among the n elements divided into multiple groups among the costs and the local fields. The processing unit 12 reads, from the storage unit 11, costs and local fields for elements belonging to a second group (gr2) among the costs and the local fields. The processing unit 12 stores the read costs and local fields into the storage unit 12a. An example of how to select gr1 and gr2 will be described later. Hereinafter, the costs or local fields for the elements belonging to gr1 or gr2 are simply referred to as costs or local fields of gr1 or gr2.

The processing unit 12 may perform the grouping or may acquire information on the grouping input from outside of the optimization apparatus 10.

In the example illustrated in FIG. 1, the costs of gr1 to which the element with the identification number = i belongs (containing the costs ($f_{1,i}$ to $f_{n,i}$) in the i-th column) are read from the matrix F expressing the cost information.

The costs of gr2 to which the element with the identification number = j belongs (containing the costs ($f_{1,j}$ to $f_{n,j}$) in the j-th column) are read.

In the example illustrated in FIG. 1, the local fields of gr1 to which the element with the identification number = i belongs (containing the local fields ($h_{i,1}$ to $h_{i,n}$) in the i-th row) are read from the matrix H expressing the local field information. The local fields of gr2 to which the element with the identification number = j belongs (containing the local fields ($h_{j,1}$ to $h_{j,n}$) in the j-th row) are read.

Step S2: A process at step S2 is performed when the processing for two groups newly set as gr1 and gr2 is performed after group switching to be described later is performed. The process at step S2 will be described later.

Step S3: The processing unit 12 calculates a change amount of the evaluation function (energy change amount ($\Delta E$)) in a case where an exchange of the arrangement locations is made between two elements belonging to gr1 or gr2 among the n elements. Here, $\Delta E$ is calculated based on the costs and the local fields of gr1 and gr2 and the distances stored in the storage unit 12a.

For example, as illustrated in FIG. 1, the processing unit 12 may calculate $\Delta E$ in the case where an exchange of the arrangement locations is made between an element with the identification number = i and an element with the identification number = j in accordance with the above-described Equation (8).

Step S4: Based on a result of comparison between $\Delta E$ and a noise value obtained based on a random number and the value of a temperature parameter, the processing unit 12 determines whether or not to make the exchange of the arrangement locations between the two elements, which will lead to $\Delta E$ calculated in the process at step S3.

For example, the processing unit 12 determines to make the exchange when $\Delta E$ is smaller than $\log(\text{rand}) \times T$, which is an example of a noise value obtained based on a uniform random number (rand) between 0 to 1, both inclusive, and the temperature parameter (T).

Step S5: When determining to make the exchange in the process at step S4, the processing unit 12 executes the exchange by updating the arrangement information and updates the local fields of gr1 and gr2.

FIG. 2 is a diagram illustrating an example of a method of updating local fields. FIG. 2 illustrates an example of a method of updating local fields in a case where an exchange of the arrangement locations is made between an element with an identification number = i and an element with an identification number = j.

The exchange of the arrangement locations between the element with the identification number = i and the element with the identification number = j is equivalent to an exchange of the i-th row and the j-th row in the arrangement information expressed by the matrix X. In this case, the local field change amount ($\Delta H$) is expressed by a product of an n-dimensional column vector ($\Delta F$) that is a difference between the i-th column and the j-th column in the matrix F and an n-dimensional row vector ($\Delta D$) that is a difference between the $\varphi(i)$-th row and the $\varphi(j)$-th row in the matrix D as illustrated in FIG. 2. For example, $\Delta H$ is expressed by Equation (9) described above.

In the process at step S5, the update is performed by adding the change amounts for the local fields of gr1 and gr2 in $\Delta H$ to the local fields of gr1 and gr2.

Step S6: The processing unit 12 stores the flip information, which is identification information (identification numbers) for identifying state variables whose values change due to the exchange, in the storage unit 11. For example, when the exchange of the arrangement locations is made between the element with the identification number = i and the element with the identification number = j as described above, the values of the four state variables $x_{i,\varphi(i)}$, $x_{j,\varphi(i)}$, $x_{i,\varphi(j)}$, and $x_{j,\varphi(j)}$ change, and thus the identification numbers = i, j, $\varphi(i)$, and $\varphi(j)$ are stored in the storage unit 11.

Step S7: When determining not to make the exchange in the process at step S4 or after the process at step S6, the processing unit 12 determines whether or not the processing for gr1 and gr2 has been completed. For example, when the processing unit 12 has completed the processes in steps S3 to S6 for all the pairs of elements selected from the elements belonging to the groups of gr1 and gr2, the processing unit 12 determines that the processing for gr1 and gr2 has been completed. When determining that the processing for gr1 and gr2 has not been completed, the processing unit 12 updates the identification numbers = i and j and iterates the processes from step S3 for the next pair of elements.

Step S8: When determining that the processing for gr1 and gr2 has been completed, the processing unit 12 switches the groups gr1 and gr2 to other groups among all the groups. The processing unit 12 may switch only one of the groups gr1 and gr2 to another group at one time.

The group switching is desirably performed such that all combinations of two groups selectable from all the groups are selected so as to take into consideration the influence of the exchange of the arrangement locations between the elements in all the pairs of the groups.

After the process at step S8, the processing unit 12 iterates the processes from step S1.

In performing the processing for a newly set pair of groups gr1 and gr2, the processing unit 12 reads the flip information from the storage unit 11 in the process at step S2. The processing unit 12 corrects the local fields of gr1 and gr2 based on the flip information, the distances, and the costs of gr1 and gr2. The local fields are corrected in accordance with, for example, Equation(9) as in the process at step S5.

Here, in the case where only one of gr1 and gr2 is switched, the above-described correction does not have to be performed for the group not switched.

By performing such correction of the local fields, an update in the arrangement information generated in the processing for the previously selected group pair may be reflected in the local fields of the group pair newly selected at this time.

The order of the processes described above is an example and is not limited to the above-described order. For example, step S5 and step S6 in the order may be reversed.

In a case of performing the simulated annealing method, the processing unit 12 decreases the value of the aforementioned temperature parameter (T) according to a predetermined schedule for temperature parameter change. The processing unit 12 outputs the arrangement information obtained by a predetermined number of iterations of the processes at steps S3 to S6, as a calculation result of the quadratic assignment problem (for example, displays the arrangement information on a display device not illustrated). The processing unit 12 may update the value of the evaluation function (energy) expressed by Equation (4) every time the arrangement locations of the elements are updated, and hold the energy and the arrangement information in the case where the energy becomes the minimum up to that time. In this case, the processing unit 12 may output, as the calculation result, the arrangement information associated with the minimum energy stored after the predetermined number of iterations of the processes at steps S3 to S6.

In the case where the processing unit 12 performs the replica exchange method, the storage unit 11 stores the matrix H for each replica. The processing unit 12 performs the processes at steps S1 to S8 illustrated in FIG. 1 in each of multiple replicas in which different values of the temperature parameter are set. Every a predetermined number of iterations of the processes at steps S3 to S6, the processing unit 12 performs replica exchange. For example, the processing unit 12 randomly selects two replicas among the multiple replicas, and exchanges the values of the temperature parameter between the two selected replicas with a predetermined exchange probability based on an energy difference between the replicas and a difference in the value of the temperature parameter between the replicas. For example, the processing unit 12 updates the value (energy) of the evaluation function expressed by Equation (4) every time the arrangement locations of the elements are updated in each replica, and holds the energy and the arrangement information in the case where the energy becomes the minimum up to that time. The processing unit 12 outputs, as the calculation result, the arrangement information associated with the lowest minimum energy in all the replicas among the minimum energies stored after the predetermined number of iterations of the processes at steps S3 to S6 in the respective replicas.

According to the optimization apparatus 10 and the optimization method in the first embodiment as described above, the storage unit 12a only has to store the costs and the local fields for two groups instead of storing all the costs and the local fields. Thus, it is possible to calculate a large scale problem even by using, for example, the storage unit 12a, such as an SRAM, allowing higher speed reading and writing but having a smaller storage capacity than those of the storage unit 11 such as an HDD or a DRAM. In the case where the replica exchange method is performed, the matrix H is used for each replica. According to the optimization apparatus 10 and the optimization method described above, the storage unit 12a does not have to hold the matrices H for all the replicas. For this reason, in the case where the replica exchange method is used, the effect of reducing the data volume stored in the storage unit 12a is higher than in the case where the simulated annealing method is used.

(Second Embodiment)

In a second embodiment to be described below, a quadratic assignment problem for assigning n elements to n assignment locations will be described by taking, as an example, a problem for arranging n facilities at n locations. Hereinafter, the above-described cost will be referred to as a flow amount. The flow amount indicates, for example, an amount of supplies transported between facilities or the like.

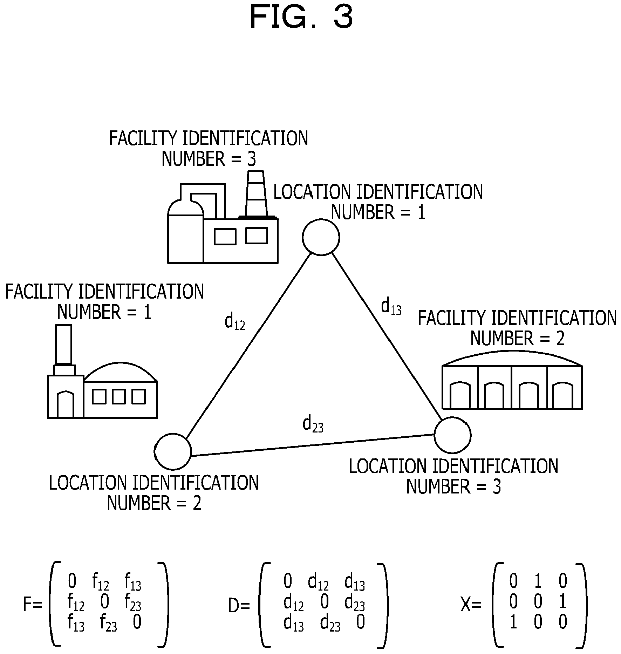

FIG. 3 is a diagram illustrating an example of a problem for arranging three facilities at three locations.

In the case of this example, a matrix F includes flow amounts in 3 rows and 3 columns, and a matrix D includes distances in 3 rows and 3 columns. In the example of FIG. 3, $f_{ij}$ is equal to $f_{ji}$ (i and j are facility identification numbers), and $f_{ji}$ is also expressed as $f_{ij}$. In the example of FIG. 3, $d_{ij}$ is equal to $d_{ji}$ (i and j are location identification numbers), and $d_{ji}$ is also expressed as $d_{ij}$.

In the example of FIG. 3, a facility with a facility identification number = 3 is arranged at a location with a location identification number = 1, a facility with a facility identification number = 1 is arranged at a location with a location identification number = 2, and a facility with a facility identification number = 2 is arranged at a location with a location identification number = 3. In this case, in arrangement information (matrix X) in which the row numbers represent the facility identification numbers and the column numbers represent the location identification numbers, the state variables at the first row in the second column, the second row in the third column, and the third row in the first column have a value of 1 and the other state variables have a value of 0.

For such a problem, an arrangement that minimizes the energy is searched for based on an energy change amount (expressed by Equation (8) described above) due to an exchange of the arrangement locations between two facilities, but the data volume to be held increases as the number of facilities or the number of locations increases.

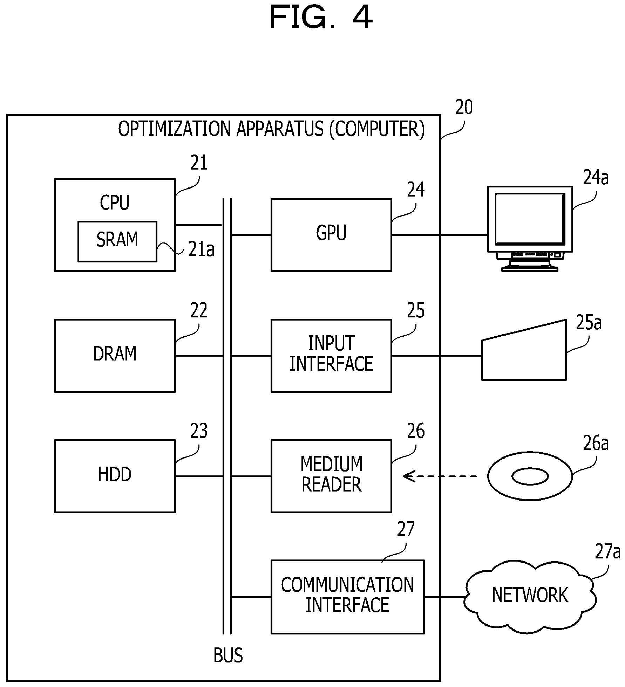

FIG. 4 is a block diagram illustrating a hardware example of the optimization apparatus according to the second embodiment.

An optimization apparatus 20 is, for example, a computer, and includes a CPU 21, a DRAM 22, an HDD 23, a graphics processing unit (GPU) 24, an input interface 25, a medium reader 26, and a communication interface 27. The above-described units are coupled to a bus.

The CPU 21 is a processor including an arithmetic circuit that executes program commands. The CPU 21 loads at least part of a program and data stored in the HDD 23 into the DRAM 22 and executes the program. The CPU 21 may include multiple processor cores or the optimization apparatus 20 may include multiple processors. The processes, which will be described below, may be executed in parallel by using the multiple processors or processor cores. A set of multiple processors (multiprocessor) may be referred to as a "processor".

The CPU 21 includes, for example, a SRAM 21a for use as a cache memory.

The DRAM 22 is a volatile semiconductor memory that temporarily stores the program to be executed by the CPU 21 and the data to be used for computation by the CPU 21. The optimization apparatus 20 may include a memory of a type other than the DRAM, and may include multiple memories.

The HDD 23 is a non-volatile storage device that stores data and software programs such as an operating system (OS), middleware, and application software. Examples of the programs include an optimization program for causing the optimization apparatus 20 to execute processing of searching for an optimal solution to a quadratic assignment problem. The optimization apparatus 20 may include another type of storage device such as a flash memory or a solid-state drive (SSD), and may include multiple non-volatile storage devices.

The GPU 24 outputs images to a display 24a coupled to the optimization apparatus 20 in accordance with instructions from the CPU 21. As the display 24a, it is possible to use a cathode ray tube (CRT) display, a liquid crystal display (LCD), a plasma display panel (PDP), an organic electroluminescence (OEL) display, or the like.

The input interface 25 acquires input signals from an input device 25a coupled to the optimization apparatus 20 and outputs the input signals to the CPU 21. As the input device 25a, it is possible to use a pointing device such as a mouse, a touch panel, a touchpad, and a trackball, as well as a keyboard, a remote controller, a button switch, and so on. Multiple types of input devices may be coupled to the optimization apparatus 20.

The medium reader 26 is a reading device that reads a program and data recorded on a recording medium 26a. As the recording medium 26a, it is possible to use, for example, a magnetic disk, an optical disk, a magneto-optical (MO) disk, a semiconductor memory, or the like. The magnetic disks include a flexible disk (FD) and an HDD. The optical disks include a compact disc (CD) and a Digital Versatile Disc (DVD).

For example, the medium reader 26 copies a program or data read from the recording medium 26a to another recording medium such as the DRAM 22 or the HDD 23. The read program is executed by, for example, the CPU 21. The recording medium 26a may be a portable recording medium, and may be used to distribute a program or data. The recording medium 26a and the HDD 23 may be referred to as computer-readable recording media.

The communication interface 27 is an interface that is connected to a network 27a and that communicates with another information processing apparatus via the network 27a. The communication interface 27 may be a wired communication interface connected to a communication device such as a switch via a cable, or may be a wireless communication interface connected to a base station via a wireless link.

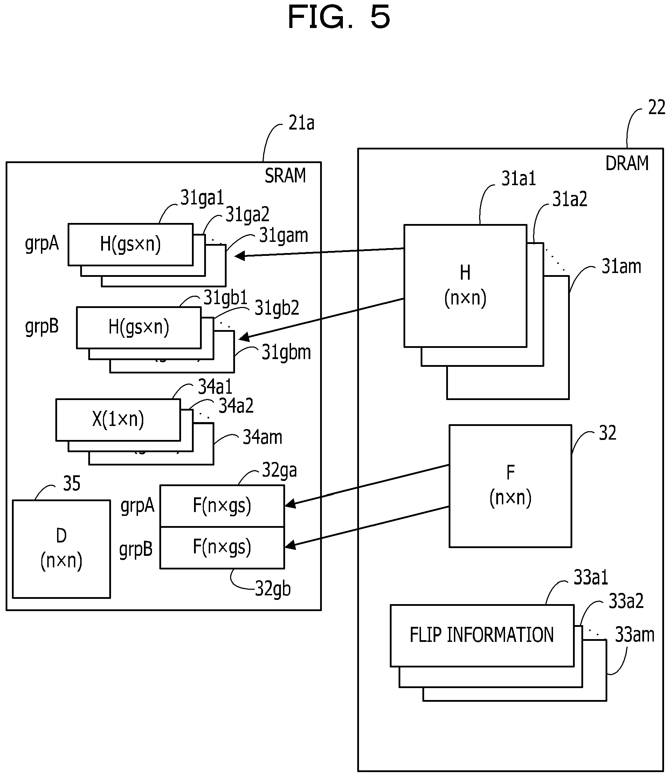

FIG. 5 is a diagram illustrating an example of data stored in the SRAM and the DRAM. FIG. 5 illustrates an example of data stored for performing an optimization method to which a replica exchange method using m replicas is applied.

The DRAM 22 stores local field information 31a1, 31a2, ..., and 31am for the number (m) of replicas, flow amount information 32, and flip information 33a1, 33a2, ..., and 33am for the number of replicas. The local field information 31a1 to 31am is expressed by a matrix H including local fields in n rows and n columns (n×n), and the flow amount information 32 is expressed by a matrix F including flow amounts in n rows and n columns (n×n). The flip information 33a1 to 33am is identification information for identifying four state variables whose values change due to an exchange of the arrangement locations between two facilities.

The SRAM 21a stores local field information 31ga1, 31ga2, ..., and 31gam, and 31gb1, 31gb2, ..., and 31gbm for a selected group pair from the local field information 31a1 to 31am divided into multiple groups. The selected group pair will be referred to as grpA and grpB below. The local field information 31ga1 to 31gam is the local field information of grpA and the local field information 31gb1 to 31gbm is the local field information of grpB. The local field information 31ga1 to 31gam and 31gb1 to 31gbm is expressed by a matrix H including local fields in gs rows and n columns. Here, gs denotes a group size.

The SRAM 21a also stores the flow amount information 32ga for the selected grpA and the flow amount information 32gb for the selected grpB from the flow amount information 32 divided into the multiple groups. The flow amount information 32ga and 32gb is expressed by a matrix F including flow amounts in n rows and gs columns.

The SRAM 21a further stores arrangement information 34a1, 34a2, ..., and 34am indicating the arrangement (assignment states) of n facilities for the number of replicas. In the case of the example illustrated in FIG. 5, the arrangement information 34a1 to 34am is expressed by a matrix X of 1 row and n columns (1×n) including a sequence of column numbers (equivalent to the aforementioned location identification numbers) of columns in the respective rows in which the state variables have a value of 1 among the state variables in the n rows and n columns.

The SRAM 21a also stores distance information 35 that contains distances between the n locations and that is expressed by a matrix D with n rows and n columns.

The local field information 31a1 to 31am, the flow amount information 32, and the flip information 33a1 to 33am may be stored in the HDD 23 instead of being stored in the DRAM 22. Even though the speeds for writing and reading of the HDD 23 are lower than those of the DRAM 22, the HDD 23 is capable of storing the local field information 31a1 to 31am, the flow amount information 32, and the flip information 33a1 to 33am for a larger scale problem.

The SRAM 21a may store the flip information 33a1 to 33am depending on the storage capacity of the SRAM 21a.

Next, description will be given of a procedure of processing (optimization method) of the optimization apparatus 20 when the CPU 21 executes the optimization program. An optimization method to which the replica exchange method is applied will be described in the following example.

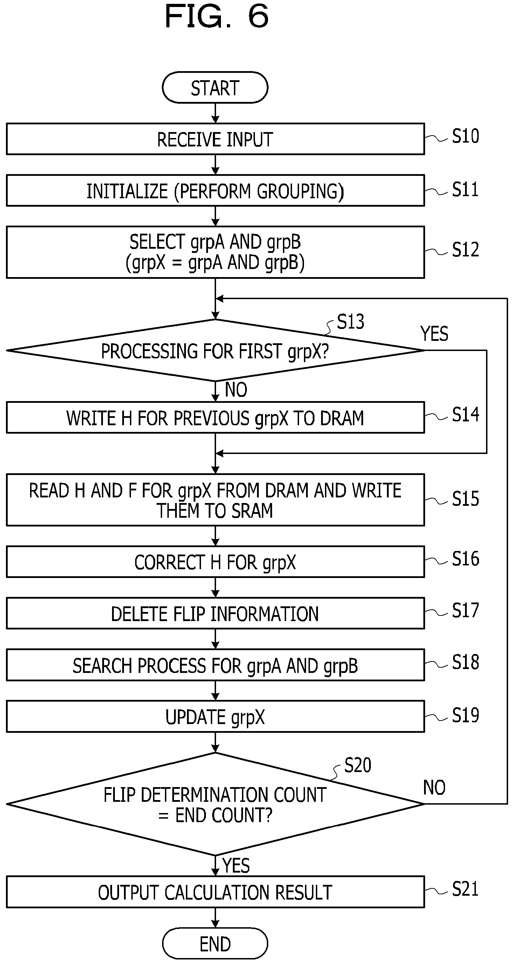

FIG. 6 is a flowchart illustrating a sequence of an example of an optimization method according to the second embodiment.

Step S10: First, the CPU 21 receives input of problem information and so on for a quadratic assignment problem. The problem information contains the flow amount information 32 and the distance information 35 as illustrated in FIG. 5. For example, the problem information may be input by a user operating the input device 25a, or may be input via the recording medium 26a or the network 27a.

The input flow amount information 32 is stored in the DRAM 22, and the input distance information 35 is stored in the SRAM 21a.

Step S11: The CPU 21 performs initialization. For example, the CPU 21 sets the initial values of the state variables so as to satisfy the constraint that the sum of the values of the state variables included in each of the n rows and the n columns is 1. The CPU 21 calculates the initial values of the n×n local fields based on the initial values of the state variables and the weight values calculated from the input flow amounts and distances. The CPU 21 calculates the initial value of the energy in accordance with Equations (4) and (5) based on the initial values of the state variables and the input flow amounts and distances. In the process at step S10, the initial values of the state variables, the initial values of the local fields, or the initial value of the energy may be input from outside of the optimization apparatus 20.

The CPU 21 stores, in the DRAM 22, the initial values of the local fields for the number of replicas as the local field information 31a1 to 31am as illustrated in FIG. 5. The CPU 21 also stores, in the SRAM 21a, the initial values of the state variables for the number of replicas as the arrangement information 34a1 to 34am including a sequence of the column numbers of the columns in the respective rows in which the state variables have a value of 1 among the state variables in the n rows and n columns as illustrated in FIG. 5. The initial value of the energy is also stored, for example, in the SRAM 21a for the number of replicas although not illustrated in FIG. 5.

The CPU 21 also sets an initial value of the temperature parameter (T) for each replica. As the value of the temperature parameter, different values are set among the replicas.

The CPU 21 divides the state variables, the flow amounts, and the distances into groups. The grouping may be performed by using facility identification numbers as illustrated in FIG. 3. This is because the column numbers (or row numbers) in the matrix F with the n rows and n columns indicating the flow amounts (costs in FIG. 1) and the row numbers in the matrix H with the n rows and n columns indicating the local fields may be expressed by the facility identification numbers for identifying facilities (the element identification numbers in FIG. 1) as illustrated in FIG. 1. In the following description, G denotes the number of groups.

Step S12: Next, the CPU 21 selects a processing target group pair grpA and grpB (hereafter, grpA and grpB may be collectively referred to as grpX) among the G groups. A method of selecting a group pair will be described later.

Step S13: The CPU 21 determines whether or not current processing is processing for the first grpX. The CPU 21 performs a process at step S15 when determining that the current processing is the processing for the first grpX, or performs a process at step S14 when determining that the current processing is not the processing for the first grpX.

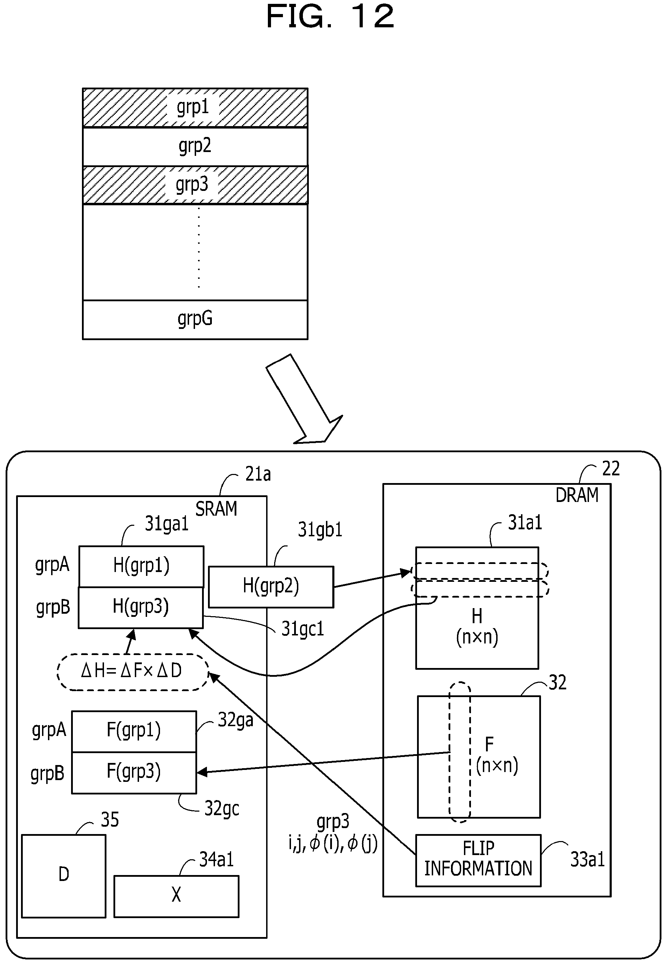

Step S14: The CPU 21 writes, to the DRAM 22, the local field information stored in the SRAM 21a for previous grpX before update of grpX in a process at step S19 to be described later. In a case where one of grpA and grpB is updated in the process at step S19, the CPU 21 does not have to write the local field information for the group not updated to the DRAM 22 because the CPU 21 again uses the local field information for the group not updated. An example of the process at step S14 will be described later (see FIG. 12).

Step S15: The CPU 21 reads the local field information and the flow information for grpX from the DRAM 22 and writes the information to the SRAM 21a.

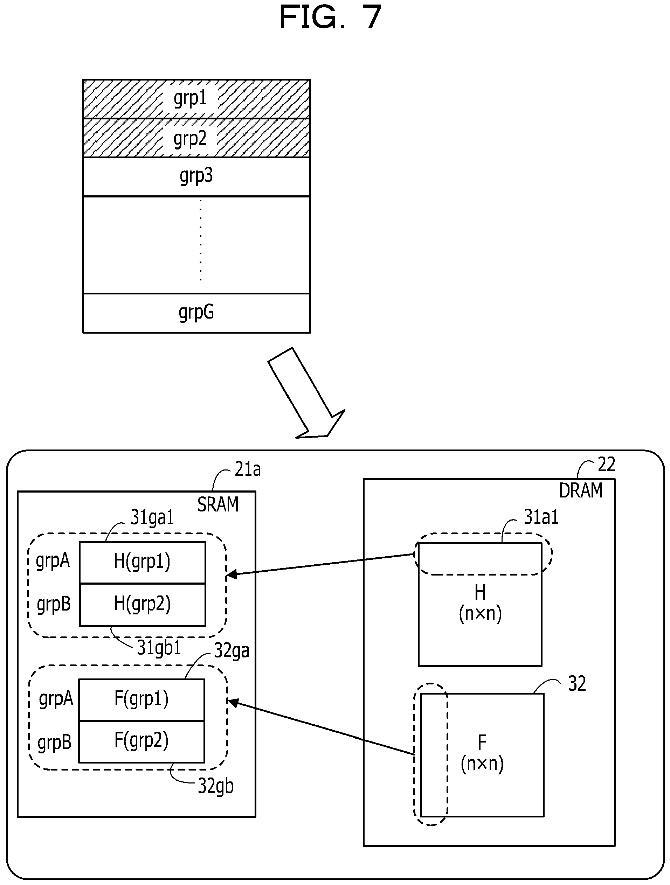

FIG. 7 is a diagram illustrating an example of writing of the local field information and the flow information for grpX to the SRAM.

When grp1 and grp2 are selected as grpA and grpB, the local fields for the facilities belonging to grp1 and grp2 (the local fields in the rows of the row numbers corresponding to the facility identification numbers of the facilities) in the local field information 31a1 are read from the DRAM 22. The read local fields are written to the SRAM 21a as the local field information 31ga1 and 31gb1.

Although not illustrated in FIG. 7, the same process is performed for the local field information 31a2 to 31am illustrated in FIG. 5.

When grp1 and grp2 are selected as grpA and grpB, the flow amounts for the facilities belonging to grp1 and grp2 (the flow amounts in the columns of the column numbers corresponding to the facility identification numbers of the facilities) in the flow amount information 32 are read from the DRAM 22. The read flow amounts are written to the SRAM 21a as the flow amount information 32ga and 32gb.

When only one of grpA and grpB is updated in the process at step S19, the CPU 21 only has to read the local field information for the updated group from the DRAM 22 and write the read local field information to the SRAM 21a (see FIG. 12).

Step S16: A process at step S16 is a process to be executed when grpX is updated. The CPU 21 corrects the local field information for grpA or grpB written to the SRAM 21a by using the flip information 33a1 to 33am and so on. An example of the process at step S16 will be described later (see FIG. 12).

Step S17: The CPU 21 deletes the flip information 33a1 to 33am used for correcting the local field information for grpA or grpB.

Step S18: The CPU 21 performs a search process to be described later concerning grpA and grpB.

Step S19: The CPU 21 updates grpX. For example, when 1 to G denote group numbers of grp1 to grpG in FIG. 7, the CPU 21 updates grpX in a way of $(1, 2) \rightarrow (1, 3) \rightarrow ... \rightarrow (1, G) \rightarrow (2, 3) \rightarrow (2, 4) \rightarrow ...$ (changes grpA or grpB to another group).

Although the method of updating grpX is not limited to the example described above, it is desirable to update grpX such that all the combinations of two groups selectable from the G groups are selected so as to take into consideration the influence of the exchange of the arrangement locations between the facilities in all the pairs of the groups.

Step S20: The CPU 21 determines whether or not a flip determination count to be described later has reached a predetermined end count. The CPU 21 performs a process at step S21 when determining that the flip determination count has reached the predetermined end count, or iterates the processes from step S13 when determining that the flip determination count has not reached the predetermined end count.

Step S21: The CPU 21 outputs a calculation result. For example, the CPU 21 outputs, as the calculation result, the arrangement information associated with the lowest minimum energy in all the replicas among the minimum energies stored for the respective replicas. For example, the CPU 21 may output and display the calculation result on the display 24a, transmit the calculation result to another information processing apparatus via the network 27a, or store the calculation result in an external storage device.

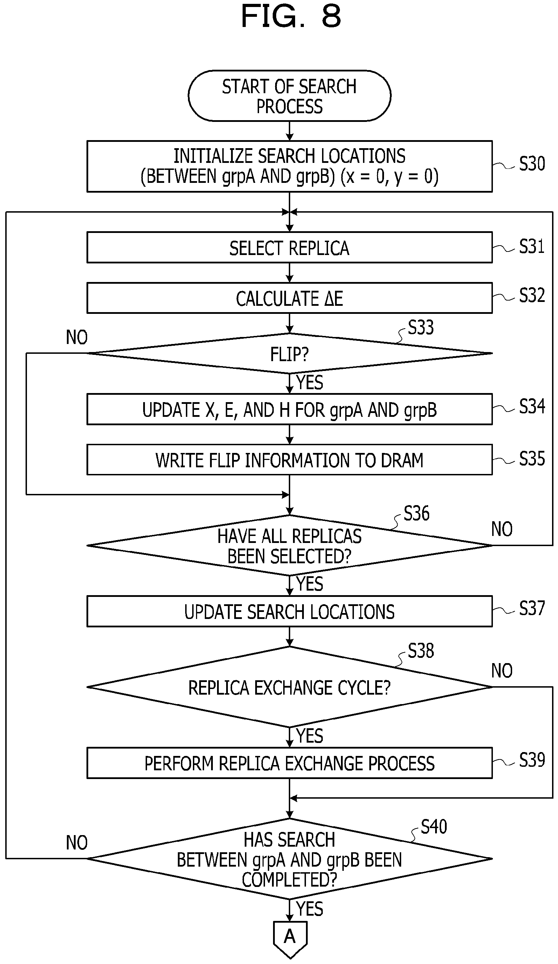

FIGs. 8, 9, and 10 are flowcharts of an example of a sequence of the search process for grpA and grpB.

Step S30: The CPU 21 initializes search locations (x, y) (set x = 0 and y = 0) for specifying two facilities for determining whether or not to exchange the arrangement locations (hereafter referred to as flip determination). In the process at step S30, x specifies the facility identification number of each facility belonging to grpA, and y specifies the facility identification number of each facility belonging to grpB. Here, x = 0 indicates the first facility identification number among the facility identification numbers of the facilities belonging to grpA, and y = 0 indicates the first facility identification number among the facility identification numbers of the facilities belonging to grpB. As described above, the facility identification numbers correspond to the row numbers in the local field information 31a1 to 31am which is the matrix H with the n rows and n columns, and correspond to the column numbers in the flow amount information 32 which is the matrix F with the n rows and n columns. Therefore, x and y specify two rows in the local field information 31a1 to 31am, and specify two columns in the flow amount information 32.

Step S31: The CPU 21 selects one of the m replicas.

Step S32: The CPU 21 calculates a change amount of the evaluation function (energy change amount ($\Delta E$)) in a case where an exchange of the arrangement locations is made between the facilities with the facility identification numbers specified by x and y (corresponding to the element identification numbers = i and j illustrated in FIGs. 1 and 2). It is possible to calculate $\Delta E$ in accordance with Equation (8) described above based on the local field information 31ga1 to 31gam and 31gb1 to 31gbm, the arrangement information 34a1 to 34am, the flow amount information 32ga, and the distance information 35 stored in the SRAM 21a.

Step S33: The CPU 21 determines whether or not to perform a flip based on a comparison result between $\Delta E$ and a noise value obtained based on the random number and the value of the temperature parameter set for the selected replica. The "flip" means that the values of the four state variables change due to an exchange of the arrangement locations between two facilities, which will lead to $\Delta E$ in Equation (8).

For example, the CPU 21 determines to perform the flip when $\Delta E$ is smaller than $\log(rand) \times T$, which is an example of a noise value obtained based on a uniform random number (rand) between 0 to 1, both inclusive, and the temperature parameter (T). The CPU 21 performs a process at step S34 when determining to perform the flip, or performs a process at step S36 when determining not to perform the flip.

Step S34: The CPU 21 executes the flip by updating the arrangement information for the selected replica in the arrangement information 34a1 to 34am. The CPU 21 updates the energy (E) by using $\Delta E$ calculated in the process at step S32. When E is the smallest value (minimum energy) in the selected replica up to this time, the CPU 21 stores the arrangement information associated with the minimum energy in a storage area in the SRAM 21a different from the storage area which stores the arrangement information 34a1 to 34am.

The CPU 21 also updates the local field information for the selected replica in the local field information 31ga1 to 31gam and 31gb1 to 31gbm. The local field information may be updated in accordance with the aforementioned Equation (9) based on the flow amount information 32ga and 32gb and the distance information 35.

Step S35: The CPU 21 writes the flip information for the selected replica in the flip information 33a1 to 33am to the DRAM 22. In the DRAM 22, storage areas for the flip information are provided for the respective groups. In the process at step S35, the flip information is written to the storage areas for groups other than the groups currently being processed as grpA and grpB.

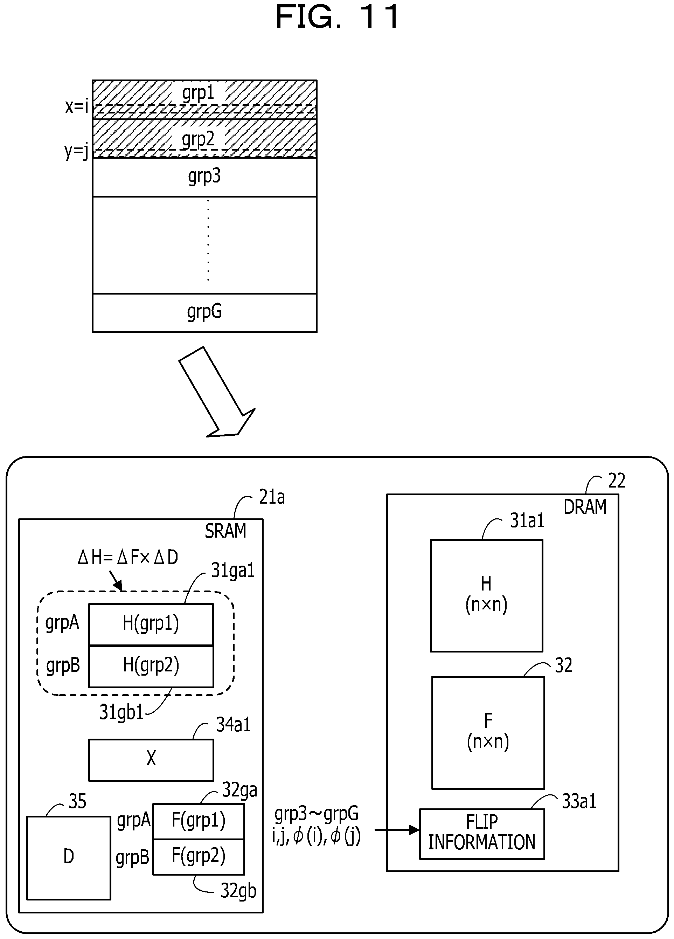

FIG. 11 is a diagram illustrating an example of update of local fields and writing of flip information in a case where a flip occurs.

FIG. 11 illustrates the example in which grp1 and grp2 are processing target groups (grpA and grpB), and an exchange (flip) of the arrangement locations is made between the facility with the facility identification number = i specified by x and the facility with the facility identification number = j specified by y.

As illustrated in FIG. 2, the local field change amount ($\Delta H$) is expressed by a product of an n-dimensional column vector ($\Delta F$) that is a difference between the i-th column and the j-th column in the matrix F and an n-dimensional row vector ($\Delta D$) that is a difference between the $\varphi(i)$-th row and the $\varphi(j)$-th row in the matrix D. For example, $\Delta H$ is expressed by Equation (9) described above.

In the process at step S34, the update is performed by adding the change amounts in the local field information 31ga1 and 31gb1 of grp1 and grp2 in $\Delta H$ to the local field information 31ga1 and 31gb1.

When the flip described above occurs, the values of the four state variables $x_{i,\varphi(i)}$, $x_{j,\varphi(i)}$, $x_{i,\varphi(j)}$, and $x_{j,\varphi(j)}$ change. For this reason, in the process at step S35, i, j, $\varphi(i)$, and $\varphi(j)$ are written to the storage areas for grp3 to grpG among the storage areas for storing the flip information 33a1 in the DRAM 22.

Step S36: The CPU 21 determines whether or not all the replicas have been selected. When the CPU 21 determine that all the replicas have not been selected, the CPU 21 returns to the process at step S31, iterates the processes at steps S32 to S35 for an unselected replica. When the CPU 21 determinine that all the replicas have been selected, the CPU 21 performs a process at step S37.

Step S37: The CPU 21 updates the search locations. In the matrix including the state variables in the n rows and n columns, for example, 1, ..., N are set as the row numbers corresponding to the facility identification numbers of the facilities belonging to grpA (or grpB). The CPU 21 first keeps x fixed and increments y by 1 to update the search locations. Then, the CPU 21 performs the same process from the next time onwards and iterates the process of resetting y to 0 and incrementing x by 1 every time y reaches N+1.

Step S38: The CPU 21 determines whether or not the flip determination count indicates a replica exchange cycle. For example, when a remainder of the flip determination count divided by a value indicating the replica exchange cycle is 0, the CPU 21 determines that the flip determination count indicates the replica exchange cycle.

The CPU 21 performs a process at step S39 when determining that the flip determination count indicates the replica exchange cycle, or performs a process at step S40 when determining that the flip determination count does not indicate the replica exchange cycle.

Step S39: The CPU 21 performs a replica exchange process. For example, the CPU 21 randomly selects two of the multiple replicas, and exchanges the set values of the temperature parameter between the two selected replicas with a predetermined exchange probability based on an energy difference between the replicas or a difference in the value of the temperature parameter between the replicas.

Instead of exchanging the values of the temperature parameter between the two replicas, the replica exchange process may exchange the arrangement information. In this case, the local field information 31a1 to 31am and the flip information 33a1 to 33am stored in the DRAM 22 are also exchanged.

Step S40: The CPU 21 determines whether or not the search between grpA and grpB has been completed. For example, when x becomes equal to N+1 as a result of the update of the search locations as described in the process at step S37, the CPU 21 determines that the search has been completed. The CPU 21 performs a process at step S41 when determining that the search between grpA and grpB has been completed or iterates the processes from step S31 when determining that the search between grpA and grpB has not been completed.

Step S41: The CPU 21 initializes the search locations (x, y) (set x = 0 and y = 1) for specifying two facilities as targets for the flip determination. In the process at step S41, both x and y specify the facility identification numbers of facilities belonging to grpB. Here, x = 0 indicates the first facility identification number among the facility identification numbers of the facilities belonging to grpB, and y = 1 indicates the second facility identification number among the facility identification numbers of the facilities belonging to grpB.

Processes at steps S42 to S47 are the same as the processes at steps S31 to S36.

Step S48: The CPU 21 updates the search locations. In the matrix including the state variables in the n rows and n columns, for example, 1, ..., N are set as the row numbers corresponding to the facility identification numbers of the facilities belonging to grpB. The CPU 21 first keeps x fixed and increments y by 1 to update the search locations. Then, the CPU 21 performs the same process from the next time onwards and iterates the process of incrementing x by 1 and setting y = x+1 every time y reaches N.

Processes at steps S49 and S50 are the same as the processes at steps S38 and S39.

Step S51: The CPU 21 determines whether or not the search in grpB has been completed. For example, when x becomes equal to N as a result of the update of the search locations as described in the process at step S48, the CPU 21 determines that the search has been completed. The CPU 21 performs a process at step S52 when determining that the search in grpB is completed, or iterates the processes from step S42 when determining that the search in grpB is not completed.

Step S52: The CPU 21 determines whether or not grpB is the last group (whether grpB = grpG). The CPU 21 performs a process at step S53 when determining that grpB is the last group, or performs the process at step S19 described above when determining that grpB is not the last group.

Step S53: The CPU 21 initializes the search locations (x, y) (set x = 0 and y = 1) for specifying two facilities as the targets for the flip determination. In the process at step S53, both x and y specify the facility identification numbers of facilities belonging to grpA. Here, x = 0 indicates the first facility identification number among the facility identification numbers of the facilities belonging to grpA, and y = 1 indicates the second facility identification number among the facility identification numbers of the facilities belonging to grpA.

Processes at steps S54 to S59 are the same as the processes at steps S31 to S36.

Step S60: The CPU 21 updates the search locations. In the matrix including the state variables in the n rows and n columns, for example, 1, ..., N are set as the row numbers corresponding to the facility identification numbers of the facilities belonging to grpA. The CPU 21 first keeps x fixed and increments y by 1 to update the search locations. Then, the CPU 21 performs the same process from the next time onwards and iterates the process of incrementing x by 1 and setting y = x+1 every time y reaches N.

Processes at steps S61 and S62 are the same as the processes at steps S38 and S39.

Step S63: The CPU 21 determines whether or not the search in grpA has been completed. For example, when x becomes equal to N as a result of the update of the search locations as described in the process at step S53, the CPU 21 determines that the search has been completed. The CPU 21 performs the process at step S19 described above when determining that the search in grpA has been completed, or iterates the processes from step S54 when determining that the search in grpA has not been completed.

FIG. 12 is a diagram illustrating an example of processing after update of grpX. FIG. 12 illustrates the example in which grpX is updated from a combination of grpA = grp1 and grpB = grp2 to a combination of grpA = grp1 and grpB = grp3 in the process at step S19 in FIG. 6.

In the process at step S14, for a certain selected replica, the local field information for grp2 included in the local field information 31a1 stored in the DRAM 22 is updated by using the local field information 31gb1 for grpB before update (the local field information for grp2) as illustrated in FIG. 12.

For the replica, the process at step S15 reads the local field information 31gc1 for grp3 from the local field information 31a1 stored in the DRAM 22, and writes it to the SRAM 21a as the local field information for grpB. The flow amount information 32gc for grp3 is read from the flow amount information 32 stored in the DRAM 22 and is written to the SRAM 21a as the flow amount information for grpB.

The local field information 31gc1 for grp3 is corrected by the process at step S16. The CPU 21 reads the flip information stored in the storage area for grp3 from the flip information 33a1 for the certain selected replica. The read flip information specifies, for example, i, j, $\varphi(i)$, and $\varphi(j)$ illustrated in FIG. 11. The CPU 21 calculates $\Delta H$ in accordance with Equation (9) from $\Delta F$ and $\Delta D$ obtained based on the flip information, and corrects the local field information 31gc1 by adding the change amount for the local field information 31gc1 for grp3 in $\Delta H$ to the local field information 31gc1. The flip information for grp3 used for correction is deleted from the DRAM 22.

The order of the processes illustrated in FIGs. 6 and 8 to 10 is an example and is not limited to the above-described order.

According to the optimization apparatus 20 and the optimization method in the second embodiment described above, the SRAM 21a only has to store the flow amounts and the location fields for two groups instead of storing all the flow amounts and the local fields. Thus, it is possible to calculate a large scale problem even by using, for example, the SRAM 21a allowing higher speed reading and writing but having a smaller storage capacity than those of the DRAM 22 or the HDD 23.

This effect is further enhanced by increasing the number of groups. For example, when n = 1024 and a data volume for each of local fields, flow amounts, and distances is 4 bytes, the data volume per replica for storing n×n local fields, n×n flow amounts, and n×n distances is 4 MB × 3 = 12 MB. In contrast, when the optimization method by the optimization apparatus 20 according to the second embodiment is applied with the number of groups = 16, the data volume per replica stored in the SRAM 21a is 5 MB, which is the sum of the data volume for the local fields calculated as (4 MB/16) $\times$ 2 = 0.5 MB, the data volume for the flow amounts similarly calculated to 0.5 MB, and the data volume for the distances = 4 MB. For example, the data volume may be reduced by 58% as compared with the case where a complete whole of the n$\times$n local fields, the n$\times$n flow amounts, and the n$\times$n distances is stored in the SRAM 21a.

Each the arrangement information 34a1 to 34am is an array of 1$\times$n as described above and is stored in the SRAM 21a in a data volume smaller than in the case where the n$\times$n state variables are stored in the SRAM 21a. Thus, the data volume stored in the SRAM 21a may be further reduced.

As described above, the above processing details may be implemented by causing the optimization apparatus 20 to execute the program (optimization program).

The program may be recorded in a computer-readable recording medium (for example, the recording medium 26a). As the recording medium, for example, a magnetic disk, an optical disk, a magneto-optical disk, a semiconductor memory, or the like may be used. The magnetic disks include an FD and an HDD. The optical disks include a CD, a CD-recordable (R)/rewritable (RW), a DVD, and a DVD-R/RW. The program may be recorded in a portable recording medium to be distributed. In this case, the program may be copied from the portable recording medium to another recording medium (for example, the HDD 23) to be executed.

(Third Embodiment)

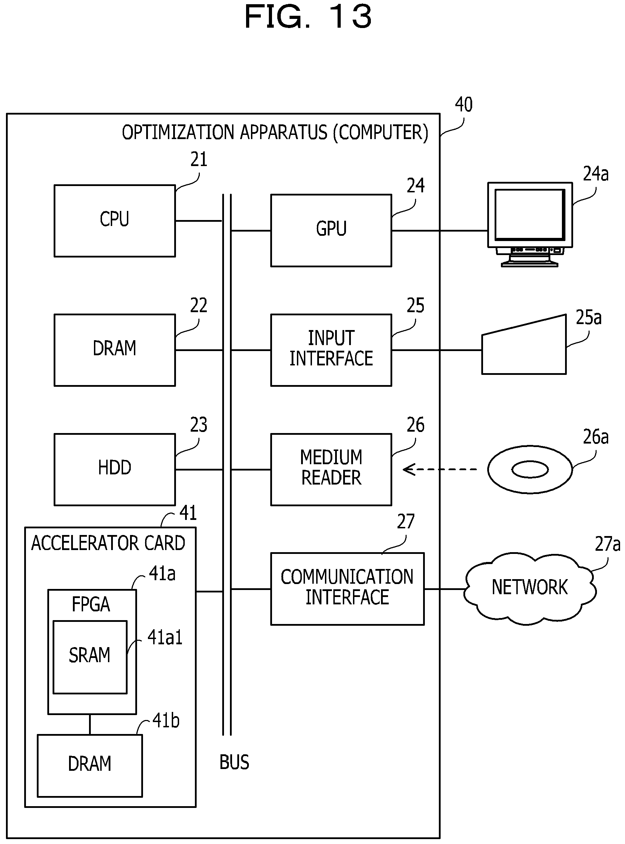

FIG. 13 is a diagram illustrating an example of an optimization apparatus according to a third embodiment. In FIG. 13, the same elements as the elements illustrated in FIG. 4 are assigned with the same reference signs.

An optimization apparatus 40 according to the third embodiment includes an accelerator card 41 coupled to a bus.

The accelerator card 41 is a hardware accelerator that searches for a solution to a quadratic assignment problem. The accelerator card 41 includes an FPGA 41a and a DRAM 41b. The FPGA 41a includes a SRAM 41a1.

In the optimization apparatus 40 according to the third embodiment, the FPGA 41a performs some of the processes illustrated in FIGs. 6 and 8 to 10 described above in place of the CPU 21. For example, in FIG. 6, the CPU 21 performs the processes at step S10 (input reception), step S11 (initialization), and step S21 (calculation result output) while the FPGA 41a performs the rest of the processes.

In the optimization apparatus 40, the SRAM 41a1 of the FPGA 41a functions as the SRAM 21a in FIGs. 5, 7, 11, and 12, while the DRAM 41b functions as the DRAM 22 in FIGs. 5, 7, 11, and 12.

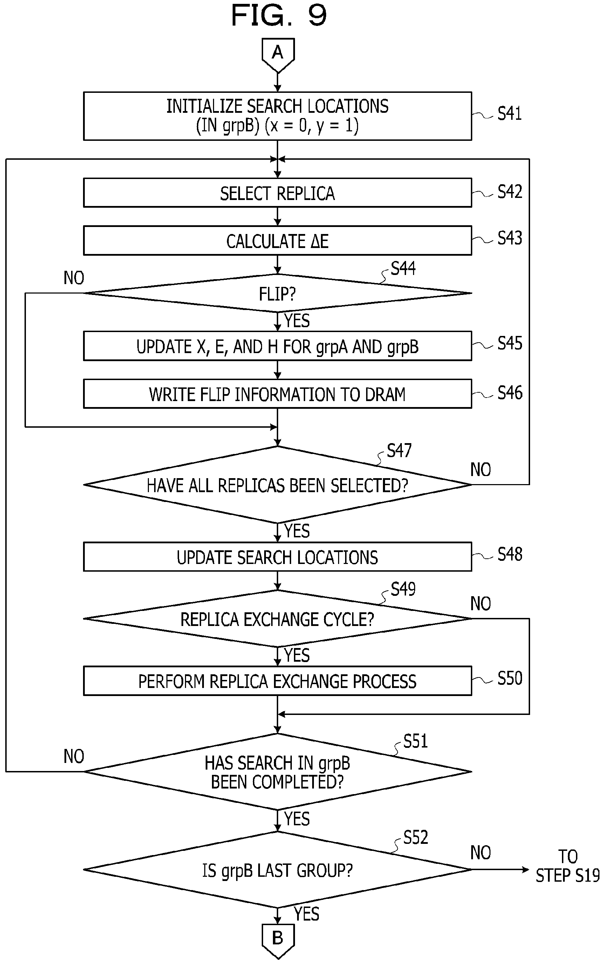

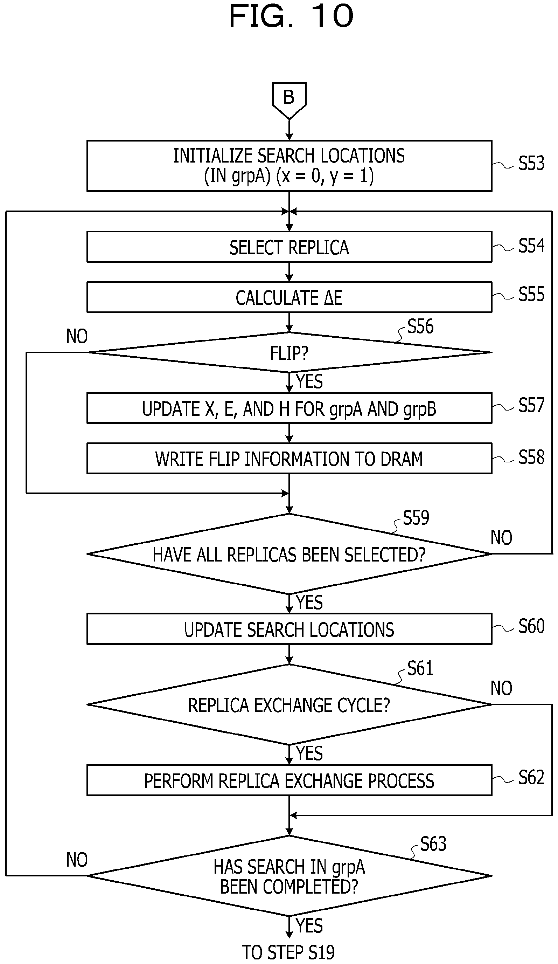

There may be provided multiple accelerator cards 41. In this case, for example, the processes (for example, the processes at steps S30 to S37 in FIG. 8, steps S41 to S48 in FIG. 9, and steps S53 to S60 in FIG. 10) for multiple replicas may be performed in parallel.

The optimization apparatus 40 according to the third embodiment described above also produces the same effect as that of the optimization apparatus 20 according to the second embodiment.

(Modification Example)

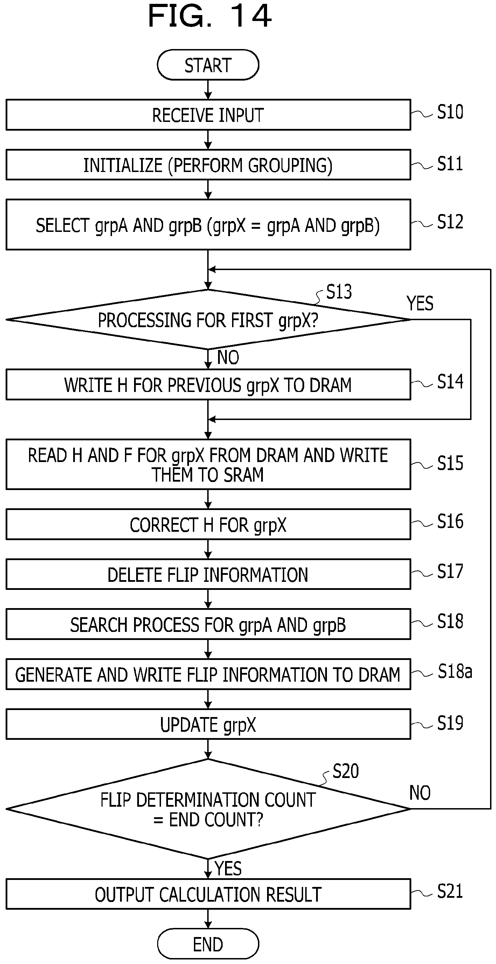

FIG. 14 is a flowchart illustrating a sequence of an optimization method according to a modification example. In FIG. 14, description of the same processes as those in FIG. 6 will be omitted herein.

According to the optimization method of the modification example, in the search process for grpA and grpB at step S18, the CPU 21 does not write the flip information to the DRAM 22 every time the CPU 21 performs the flip as illustrated in FIGs. 8, 9, and 10. Instead, between the process at step S18 and the process at step S19, the CPU 21 generates the flip information and writes the flip information to the DRAM 22 (step S18a).

To perform the process at step S18a, the CPU 21 holds the arrangement information at the start of the processing for certain grpX in the SRAM 21a, compares the arrangement information at the end of the processing for grpX with the arrangement information at the start of the processing for grpX, and finds out state variables whose values changed. The CPU 21 generates the flip information by using the identification information for the found-out state variables.

According to the above-described method, the CPU 21 does not have to write the flip information to the DRAM 22 every time the CPI 21 performs the flip.

Although some aspects of the optimization apparatus, the optimization method, and the optimization program according to the present disclosure have been described above based on the embodiments, the embodiments are merely examples and the present disclosure is not to be limited to the above description.

For example, during the writing of the flip information to the DRAM 22 or the process of correcting the local field information using the flip information, another process (such as the search process at step S18 in FIG. 6) may be performed. The SRAM 21a may have a double buffer configuration. In this case, when the CPU 21 reads the local field information or the flow amount information for a certain group from the DRAM 22 and writes the information to the SRAM 21a, the CPU 21 may concurrently perform another process (such as the search process at step S18 in FIG. 6).

**Claims**

1.  An optimization program in which a computer executes performs processing of:

    reading information from a first memory that stores costs between n elements, where n is an integer of 2 or more, and $n^2$ local fields expressing a first change amount of an evaluation function of an Ising type expressing assignment states of the n elements to n assignment locations, the first change amount obtained from a change in a value of each of $n^2$ state variable in the evaluation function, the information including first cost for element belonging to a first group among the n elements divided into a plurality of groups, a first local field for the element belonging to the first group, second cost for element belonging to a second group among the n elements divided into the plurality of groups, and a second local field for element belonging to a second group,
    writing the read information to a second memory that stores distance between the n assignment locations and the assignment states and that has a smaller capacity than that of the first memory;
    iterating processing of calculating, executing, and updating, the calculating includes calculating a second change amount of the evaluation function when an exchange of the assignment locations is made between two elements belonging to the first group or the second group, based on the first local field, the second local field, the first cost, and the distance, the executing includes executing, when the second change amount is smaller than a noise value obtained based on a random number and a value of a temperature parameter, the exchange, the updating includes updating the first local field and the second local field based on the first cost, the second cost, and the distance; and
    switching a group pair of the first and second groups by changing at least one of the first and second groups to another group in the plurality of groups.

2.  The optimization program according to claim 1, the processing further includes:
    correcting, before the calculating the second change amount after the switching of the group pair, the first local field or the second local field based on identification information of the state variable whose value changed due to the exchange in the process for the previous group pair, the distance, and the first costs, or the second costs.

3.  The n optimization program according to claim 2, the processing further includes:
    storing the identification information in the first memory or the second memory every time the exchange is made.

4.  The optimization program according to claim 2, the processing further includes:
    generating the identification information based on a result of comparison between the assignment states at the start of the processing for the group pair and the assignment states at the end of the processing for the group pair.

5.  The optimization program according to any one of claims 1 to 4, wherein

    the assignment states and the $n^2$ local fields are stored for each of a plurality of replicas, and
    the processing is executed for each of the plurality of replicas, the processing further includes exchanging the values of the temperature parameter between any two of the plurality of replicas at a predetermined cycle.

6.  The non-transitory computer-readable recording medium according to any one of claims 1 to 5, wherein

    the costs are expressed by a first matrix in which the n elements are set as rows and columns,
    the $n^2$ local field are expressed by a second matrix in which the n elements and the n assignment locations are set as rows and columns,
    the first cost are the cost included in a predetermined column of the first matrix,
    the first local field are the local field included in a predetermined row of the second matrix among the $n^2$ local fields,
    the second cost are the cost included in another column of the first matrix, and
    the second local field are the local field included in another row of the second matrix among the $n^2$ local field.

7.  The optimization program according to any one of claims 1 to 6, wherein
    the evaluation function is a function including a total sum of products of the costs and the distance between the n assignment locations, where each of the costs indicates an amount of supplies transported between the corresponding two of the n elements in a case where the n elements are assigned to the n assignment locations.

**8.** An optimization method comprising:

reading information from a first memory that stores costs between n elements, where n is an integer of 2 or more, and $n^2$ local fields expressing a first change amount of an evaluation function of an Ising type expressing assignment states of the n elements to n assignment locations, the first change amount obtained from a change in a value of each of $n^2$ state variable in the evaluation function, the information including first cost for element belonging to a first group among the n elements divided into a plurality of groups, first local fields for the element belonging to the first group, second cost for element belonging to a second group among the n elements divided into the plurality of groups, and a second local field for element belonging to a second group,

writing the read information to a second memory that stores distance between the n assignment locations and the assignment states and that has a smaller capacity than that of the first memory;

iterating processing of calculating, executing, and updating, the calculating includes calculating a second change amount of the evaluation function when an exchange of the assignment locations is made between two elements belonging to the first group or the second group, based on the first local field, the second local field, the first cost, and the distance, the executing includes executing, when the second change amount is smaller than a noise value obtained based on a random number and a value of a temperature parameter, the exchange, the updating includes updating the first local field and the second local field based on the first cost, the second cost, and the distance; and

switching a group pair of the first and second groups by changing at least one of the first and second groups to another group in the plurality of groups.

**9.** An optimization apparatus comprising:

a first memory configured to store costs between n elements, where n is an integer of 2 or more, and $n^2$ local fields expressing a first change amount of an evaluation function of an Ising type expressing assignment states of the n elements to n assignment locations, the first change amount obtained from a change in a value of each of $n^2$ state variable in the evaluation function,

a second memory configured to store distance between the n assignment locations and the assignment states and to have a smaller capacity than that of the first memory; and

a processor coupled to the first memory and the second memory and configured to:

read information from the first memory, the information including first cost for element belonging to a first group among the n elements divided into a plurality of groups, a first local field for the element belonging to the first group, second cost for element belonging to a second group among the n elements divided into the plurality of groups, and a second local field for the element belonging to a second group,

write the read information to the second memory,

iterate processing of calculating, executing, and updating, the calculating includes calculating a second change amount of the evaluation function when an exchange of the assignment locations is made between two elements belonging to the first group or the second group, based on the first local field, the second local field, the first cost, and the distance, the executing includes executing, when the second change amount is smaller than a noise value obtained based on a random number and a value of a temperature parameter, the exchange, the updating includes updating the first local field and the second local field based on the first cost, the second cost, and the distance, and

switch a group pair of the first and second groups by changing at least one of the first and second groups to another group in the plurality of groups.

# FIG. 1

**COST INFORMATION (F)**

ELEMENT IDENTIFICATION NUMBER

|  | 1 | i | j | n |
|---|---|---|---|---|
| 1 | $f_{1,1}$ | $f_{1,i}$ | $f_{1,j}$ | $f_{1,n}$ |
| | | | | |
| n | $f_{n,1}$ | $f_{n,i}$ | $f_{n,j}$ | $f_{n,n}$ |

ELEMENT IDENTIFICATION NUMBER

gr1  gr2

**LOCAL FIELD INFORMATION (H)**

LOCATION IDENTIFICATION NUMBER

|  | 1 | n |
|---|---|---|
| 1 | $h_{1,1}$ | $h_{1,n}$ |
| i | $h_{i,1}$ | $h_{i,n}$ |
| j | $h_{j,1}$ | $h_{j,n}$ |
| n | $h_{n,1}$ | $h_{n,n}$ |

ELEMENT IDENTIFICATION NUMBER

gr1
gr2

**DISTANCE INFORMATION (D)**

LOCATION IDENTIFICATION NUMBER

|  | 1 | n |
|---|---|---|
| 1 | $d_{1,1}$ | $d_{1,n}$ |
| n | $d_{n,1}$ | $d_{n,n}$ |

LOCATION IDENTIFICATION NUMBER

**ARRANGEMENT INFORMATION (X)**

LOCATION IDENTIFICATION NUMBER

|  | 1 | n |
|---|---|---|
| 1 | $x_{1,1}$ | $x_{1,n}$ |
| i | $x_{i,1}$ | $x_{i,n}$ |
| j | $x_{j,1}$ | $x_{j,n}$ |
| n | $x_{1,n}$ | $x_{n,n}$ |

ELEMENT IDENTIFICATION NUMBER

**S1** — STORE F AND H OF gr1 AND gr2 IN STORAGE UNIT 12a

**S2** — CORRECT H Of gr1 AND gr2

**S3** — CALCULATE ΔE

**S4** — LOCATION EXCHANGE? — NO / YES

**S5** — UPDATE X AND H FOR gr1 AND gr2

**S6** — STORE FLIP INFORMATION

**S7** — HAS PROCESSING FOR gr1 AND gr2 BEEN COMPLETED? — NO / YES

**S8** — SWITCH GROUPS

**OPTIMIZATION APPARATUS** — 10

**PROCESSING UNIT** — 12

**STORAGE UNIT** — 12a

- DISTANCE INFORMATION (D)
- ARRANGEMENT INFORMATION (X)
- F AND H FOR gr1
- F AND H FOR gr2

**STORAGE UNIT** — 11

- COST INFORMATION (F)
- LOCAL FIELD INFORMATION (H)
- FLIP INFORMATION

# FIG. 2

**ARRANGEMENT INFORMATION (X)**

LOCATION IDENTIFICATION NUMBER

$\phi(i)$   $\phi(j)$

ELEMENT IDENTIFICATION NUMBER

i ------1

j ------1

**EXECUTION OF EXCHANGE**

**ARRANGEMENT INFORMATION (X)**

LOCATION IDENTIFICATION NUMBER

$\phi(j)$   $\phi(i)$

ELEMENT IDENTIFICATION NUMBER

i ------1

j ------1

**COST INFORMATION (F)**

ELEMENT IDENTIFICATION NUMBER

i      j

ELEMENT IDENTIFICATION NUMBER

1   $f_{1,i}$   $f_{1,j}$

n   $f_{n,i}$   $f_{n,j}$

**DISTANCE INFORMATION (D)**

LOCATION IDENTIFICATION NUMBER

1 ......... n

LOCATION IDENTIFICATION NUMBER

$\phi(i)$   $d_{\phi(i),1}$ ..... $d_{\phi(i),n}$

$\phi(j)$   $d_{\phi(j),1}$ ..... $d_{\phi(j),n}$

$-$

$-$

$\Delta F$

$\times$

$\Delta D$

$\Delta H$

# FIG. 3

FACILITY IDENTIFICATION
NUMBER = 3

LOCATION IDENTIFICATION
NUMBER = 1

FACILITY IDENTIFICATION
NUMBER = 1

$d_{12}$

$d_{13}$

FACILITY IDENTIFICATION
NUMBER = 2

$d_{23}$

LOCATION IDENTIFICATION
NUMBER = 2

LOCATION IDENTIFICATION
NUMBER = 3

$$F = \begin{pmatrix} 0 & f_{12} & f_{13} \\ f_{12} & 0 & f_{23} \\ f_{13} & f_{23} & 0 \end{pmatrix} \qquad D = \begin{pmatrix} 0 & d_{12} & d_{13} \\ d_{12} & 0 & d_{23} \\ d_{13} & d_{23} & 0 \end{pmatrix} \qquad X = \begin{pmatrix} 0 & 1 & 0 \\ 0 & 0 & 1 \\ 1 & 0 & 0 \end{pmatrix}$$

# FIG. 4

OPTIMIZATION APPARATUS (COMPUTER)     20

CPU     21

SRAM     21a

GPU     24

24a

DRAM     22

INPUT INTERFACE     25

25a

HDD     23

MEDIUM READER     26

26a

COMMUNICATION INTERFACE     27

NETWORK     27a

BUS

# FIG. 5

# FIG. 6

START

RECEIVE INPUT ～ S10

INITIALIZE (PERFORM GROUPING) ～ S11

SELECT grpA AND grpB
(grpX = grpA AND grpB) ～ S12

PROCESSING FOR FIRST grpX? ～ S13    YES

NO

WRITE H FOR PREVIOUS grpX TO DRAM ～ S14

READ H AND F FOR grpX FROM DRAM AND WRITE
THEM TO SRAM ～ S15

CORRECT H FOR grpX ～ S16

DELETE FLIP INFORMATION ～ S17

SEARCH PROCESS FOR grpA AND grpB ～ S18

UPDATE grpX ～ S19

FLIP DETERMINATION COUNT
= END COUNT? ～ S20    NO

YES

OUTPUT CALCULATION RESULT ～ S21

END

# FIG. 7

# FIG. 8

```
            ┌─────────────────────┐
            │  START OF SEARCH    │
            │     PROCESS         │
            └──────────┬──────────┘
                       │
   ┌───────────────────▼────────────────────┐
   │  INITIALIZE SEARCH LOCATIONS            │ ～S30
   │  (BETWEEN grpA AND grpB) (x = 0, y = 0) │
   └───────────────────┬────────────────────┘
                       │
   ┌───────────────────▼────────────────────┐
   │            SELECT REPLICA               │ ～S31
   └───────────────────┬────────────────────┘
                       │
   ┌───────────────────▼────────────────────┐
   │            CALCULATE ΔE                 │ ～S32
   └───────────────────┬────────────────────┘
                       │   S33
       NO  ◇───────────▼───────────◇
        ┌──┤          FLIP?         │
        │  ◇───────────┬───────────◇
        │              │YES
        │  ┌───────────▼────────────────────┐
        │  │  UPDATE X, E, AND H FOR         │ ～S34
        │  │  grpA AND grpB                  │
        │  └───────────┬────────────────────┘
        │              │
        │  ┌───────────▼────────────────────┐
        │  │  WRITE FLIP INFORMATION TO DRAM │ ～S35
        │  └───────────┬────────────────────┘
        └──────────────┤
                       │   S36
                       ▼              NO
              ◇─────────────────◇
              │  HAVE ALL REPLICAS│────►
              │  BEEN SELECTED?   │
              ◇────────┬─────────◇
                       │YES
   ┌───────────────────▼────────────────────┐
   │        UPDATE SEARCH LOCATIONS          │ ～S37
   └───────────────────┬────────────────────┘
                       │   S38
                       ▼              NO
              ◇─────────────────◇
              │ REPLICA EXCHANGE  │────►
              │      CYCLE?       │
              ◇────────┬─────────◇
                       │YES
   ┌───────────────────▼────────────────────┐
   │     PERFORM REPLICA EXCHANGE PROCESS    │ ～S39
   └───────────────────┬────────────────────┘
                       │
                       ▼   S40
       NO  ◇─────────────────────◇
        ┌──┤   HAS SEARCH         │
        │  │ BETWEEN grpA AND grpB BEEN
        │  │   COMPLETED?         │
        │  ◇──────────┬──────────◇
        │             │YES
        │           ┌─▼─┐
        │           │ A │
        │           └───┘
```

# FIG. 9

A

| INITIALIZE SEARCH LOCATIONS (IN grpB) (x = 0, y = 1) | S41 |

| SELECT REPLICA | S42 |

| CALCULATE ΔE | S43 |

S44

FLIP? — NO

↓ YES

| UPDATE X, E, AND H FOR grpA AND grpB | S45 |

| WRITE FLIP INFORMATION TO DRAM | S46 |

S47

HAVE ALL REPLICAS BEEN SELECTED? — NO

↓ YES

| UPDATE SEARCH LOCATIONS | S48 |

S49

REPLICA EXCHANGE CYCLE? — NO

↓ YES

| PERFORM REPLICA EXCHANGE PROCESS | S50 |

S51

NO — HAS SEARCH IN grpB BEEN COMPLETED?

↓ YES

S52

IS grpB LAST GROUP? — NO → TO STEP S19

↓ YES

B

# FIG. 10

```
                    ┌───┐
                    │ B │
                    └─┬─┘
                      ▼
┌──────────────────────────────────────────┐
│        INITIALIZE SEARCH LOCATIONS        │── S53
│         (IN grpA) (x = 0, y = 1)          │
└──────────────────────────────────────────┘
                      ▼
┌──────────────────────────────────────────┐
│              SELECT REPLICA               │── S54
└──────────────────────────────────────────┘
                      ▼
┌──────────────────────────────────────────┐
│              CALCULATE ΔE                 │── S55
└──────────────────────────────────────────┘
                      ▼
        NO                         S56
         ◇────────── FLIP? ──────────◇
                      │ YES
                      ▼
┌──────────────────────────────────────────┐
│     UPDATE X, E, AND H FOR grpA AND grpB  │── S57
└──────────────────────────────────────────┘
                      ▼
┌──────────────────────────────────────────┐
│        WRITE FLIP INFORMATION TO DRAM     │── S58
└──────────────────────────────────────────┘
                      ▼
                              S59            NO
         ◇──── HAVE ALL REPLICAS BEEN SELECTED? ────◇
                      │ YES
                      ▼
┌──────────────────────────────────────────┐
│           UPDATE SEARCH LOCATIONS         │── S60
└──────────────────────────────────────────┘
                      ▼
                              S61            NO
         ◇──── REPLICA EXCHANGE CYCLE? ────◇
                      │ YES
                      ▼
┌──────────────────────────────────────────┐
│       PERFORM REPLICA EXCHANGE PROCESS    │── S62
└──────────────────────────────────────────┘
                      ▼
        NO                    S63
         ◇──── HAS SEARCH IN grpA BEEN COMPLETED? ────◇
                      │ YES
                      ▼
                 TO STEP S19
```

# FIG. 11

# FIG. 12

# FIG. 13

OPTIMIZATION APPARATUS (COMPUTER) 40

CPU 21

GPU 24 — 24a

DRAM 22

INPUT INTERFACE 25 — 25a

HDD 23

MEDIUM READER 26 — 26a

ACCELERATOR CARD 41

FPGA 41a

SRAM 41a1

COMMUNICATION INTERFACE 27 — NETWORK 27a

DRAM 41b

BUS

# FIG. 14

```
        ( START )
            │
            ▼
┌──────────────────────────────────┐
│          RECEIVE INPUT           │─── S10
└──────────────────────────────────┘
            │
            ▼
┌──────────────────────────────────┐
│     INITIALIZE (PERFORM GROUPING) │─── S11
└──────────────────────────────────┘
            │
            ▼
┌──────────────────────────────────┐
│ SELECT grpA AND grpB (grpX = grpA AND grpB) │─── S12
└──────────────────────────────────┘
            │
            ▼ ◄─────────────────────────────┐
          S13                               │
        ╱────────────────────────╲   YES    │
       ╱  PROCESSING FOR FIRST grpX? ╲───────┤
        ╲────────────────────────╱          │
            │ NO                             │
            ▼                                │
┌──────────────────────────────────┐        │
│   WRITE H FOR PREVIOUS grpX TO DRAM │─── S14│
└──────────────────────────────────┘        │
            │ ◄──────────────────────────────┘
            ▼
┌──────────────────────────────────┐
│ READ H AND F FOR grpX FROM DRAM AND WRITE │─── S15
│           THEM TO SRAM           │
└──────────────────────────────────┘
            │
            ▼
┌──────────────────────────────────┐
│         CORRECT H FOR grpX       │─── S16
└──────────────────────────────────┘
            │
            ▼
┌──────────────────────────────────┐
│       DELETE FLIP INFORMATION    │─── S17
└──────────────────────────────────┘
            │
            ▼
┌──────────────────────────────────┐
│    SEARCH PROCESS FOR grpA AND grpB │─── S18
└──────────────────────────────────┘
            │
            ▼
┌──────────────────────────────────┐
│ GENERATE AND WRITE FLIP INFORMATION TO DRAM │─── S18a
└──────────────────────────────────┘
            │
            ▼
┌──────────────────────────────────┐
│           UPDATE grpX            │─── S19
└──────────────────────────────────┘
            │
            ▼
          S20
        ╱────────────────────────╲   NO
       ╱   FLIP DETERMINATION COUNT ╲──────►
        ╲      = END COUNT?        ╱
        ╲────────────────────────╱
            │ YES
            ▼
┌──────────────────────────────────┐
│      OUTPUT CALCULATION RESULT   │─── S21
└──────────────────────────────────┘
            │
            ▼
        (  END  )
```

Europäisches
Patentamt
European
Patent Office
Office européen
des brevets

**EUROPEAN SEARCH REPORT**

Application Number

**EP 21 21 4010**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAGHERBEIK MOHAMMAD ET AL: "A Permutational Boltzmann Machine with Parallel Tempering for Solving Combinatorial Optimization Problems", 31 August 2020 (2020-08-31), COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], SPRINGER INTERNATIONAL PUBLISHING, CHAM, PAGE(S) 317 - 331, XP047560373, ISBN: 978-3-030-58594-5 [retrieved on 2020-08-31] * Sections 1-6; figures 1-3 * | 1-9 | INV. G06N5/00 G06N3/04 |
| A | US 2020/393798 A1 (KUSHIBE DAISUKE [JP]) 17 December 2020 (2020-12-17) * the whole document * | 1-9 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 7 July 2022 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 4010

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2022

| Patent document cited in search report | Publication date | Patent family member(s) | Publication date |
|---|---|---|---|
| US 2020393798 A1 | 17-12-2020 | JP 2020205049 A | 24-12-2020 |
| | | US 2020393798 A1 | 17-12-2020 |

EPO FORM P0459

For more details about this annex : see Official Journal of the European Patent Office, No. 12/82

**EP 4 068 167 A1**

**Patent documents cited in the description**

- JP 2019159997 A

- JP 2020135727 A